(19) Europäisches Patentamt
European Patent Office
Office européen des brevets

(11) **EP 2 469 501 A2**

(12) **DEMANDE DE BREVET EUROPEEN**

(43) Date de publication:
**27.06.2012 Bulletin 2012/26**

(51) Int Cl.:
*G09B 25/06* [(2006.01)]     *G09B 29/10* [(2006.01)]
*G06T 17/05* [(2011.01)]

(21) Numéro de dépôt: **11306758.1**

(22) Date de dépôt: **22.12.2011**

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**
Etats d'extension désignés:
**BA ME**

(30) Priorité: **23.12.2010 FR 1005103**

(71) Demandeur: **Thales**
**92200 Neuilly Sur Seine (FR)**

(72) Inventeurs:
- **Louis, Christian**
  **91883 Massy (FR)**
- **Reynaud, Sébastien**
  **91883 Massy (FR)**
- **Spery, Laurent**
  **91883 Massy (FR)**

(74) Mandataire: **Blot, Philippe Robert Emile**
**Cabinet Lavoix**
**2, place d'Estienne d'Orves**
**75441 Paris Cedex 09 (FR)**

(54) **Procédé de détermination d'une erreur de localisation dans une image géoréférencée et dispositif associé**

(57)     L'invention concerne un procédé de détermination d'une erreur de localisation ($\varepsilon$) d'un point ($P_0$) d'une image brute, comprenant les étapes de :
- estimer la valeur d'une grandeur statistique (G) caractéristique d'une loi de probabilité (D(X, Y, Z)) d'au moins une coordonnée terrain (X,Y, Z) associée au point ($P_0$) de l'image brute, à l'aide d'une loi de probabilité ($D(\theta_1,...,\theta_n)$) de grandeurs ($\theta_1, ..., \theta_n$) dépendant des conditions de prise de l'image brute et d'une fonction de localisation, déduite d'une fonction de prise de vue et d'un modèle de terrain et appliquée pour le point ($P_0$) de coordonnées image de l'image brute ; et
- déduire de la valeur de la grandeur statistique (G) l'erreur de localisation ($\varepsilon$) du point ($P_0$) de l'image brute.

FIG.3

**Description**

La présente invention concerne un procédé de détermination d'une erreur de localisation d'un point d'une image brute, chaque point de l'image brute de coordonnées image dans l'image brute étant associé à des valeurs annoncées de coordonnées terrain définissant la localisation géographique de l'objet représenté par le point de l'image brute;

le procédé comprenant les étapes de :

- fournir une fonction de prise de vue associant chaque point de l'image brute à des coordonnées terrain correspondantes, la fonction de prise de vue prenant comme paramètres des grandeurs dépendant des conditions de prise de l'image brute, les grandeurs ayant une loi de probabilité connue ;
- fournir un modèle de terrain reliant entre elles les coordonnées terrain ; et
- déduire de la fonction de prise de vue et du modèle de terrain au moins une fonction de localisation donnant, pour un point de l'image brute donné, au moins certaines des coordonnées terrain de localisation de l'objet représenté par le point de l'image brute en fonction des grandeurs dépendant des conditions de prise de l'image brute.

Une image issue d'un capteur d'observation est dite géoréférencée lorsqu'elle est fournie accompagnée d'une fonction mathématique permettant d'effectuer une correspondance entre les points de l'image et les coordonnées géographiques des points correspondants dans le monde tridimensionnel visualisé. Il existe deux types d'images géoréférencées, les images brutes, issues directement du capteur d'observation, et les images retraitées, notamment orthorectifiées, encore appelées orthoimages, qui ont notamment été corrigées des effets du relief du terrain visualisé, et qui supposent que en chaque point de l'image, le point d'observation est à la verticale du point du terrain correspondant. Ainsi, une image orthorectifiée est une image dont la géométrie a été redressée de manière à ce que chacun de ses points soit superposable à une carte plane qui lui correspond.

Tout objet vu sur une image géoréférencée peut ainsi être localisé dans le monde tridimensionnel visualisé, encore appelé terrain. Cette localisation est cependant entachée d'erreurs, dues notamment à des incertitudes sur les paramètres des capteurs d'observation ayant acquis l'image.

Pour de nombreuses applications, telles que la télédétection ou la géographie numérique, il est important de connaître la précision du géoréférencement d'une image géoréférencée.

A cet effet, certains fournisseurs d'images géoréférencées fournissent leurs images accompagnées d'une indication de l'erreur de localisation moyenne. Cette erreur de localisation moyenne est uniforme sur toute l'image. Elle peut être par exemple déterminée à l'aide de points dits « de contrôle » qui sont des points caractéristiques du paysage que l'on sait reconnaître dans les images, et dont on connaît a priori la localisation géographique avec une grande précision. Ainsi, on détermine l'erreur moyenne de localisation par comparaison des coordonnées géographiques desdits points indiquées sur l'image géoréférencée avec les coordonnées géographiques réelles de ces points et par moyennage des erreurs obtenues pour chaque point de contrôle.

L'indication d'une telle erreur moyenne ne donne cependant pas entière satisfaction. En effet, l'erreur varie fortement au sein des images, notamment du fait des circonstances de prise de vue et du relief du terrain visualisé. L'indication d'une erreur moyenne uniforme sur l'image n'est donc pas pertinente.

En outre, l'erreur moyenne indiquée ne tient pas compte des incertitudes sur la représentation de la surface terrestre utilisée pour réaliser le géoréférencement.

Ainsi, l'erreur annoncée est à la fois très imprécise et non maîtrisée.

Un but de l'invention est de fournir un procédé permettant de déterminer, pour chaque point d'une image géoréférencée, l'erreur dont est entachée la localisation de ce point sans faire appel à l'erreur attachée à d'autres points de l'image.

A cet effet, l'invention a pour objet un procédé de détermination d'une erreur de localisation tel que défini ci-dessus, caractérisé en ce qu'il comprend en outre les étapes de :

- estimer, à l'aide de la loi de probabilité des grandeurs et de l'au moins une fonction de localisation appliquée pour le point de coordonnées image de l'image brute, la valeur d'une grandeur statistique caractéristique d'une loi de probabilité d'au moins l'une des coordonnées terrain associées au point de l'image brute ; et
- déduire de la valeur de la grandeur statistique l'erreur de localisation du point de l'image brute.

Selon des modes particuliers de mise en oeuvre, le procédé selon l'invention comprend l'une ou plusieurs des caractéristiques suivantes, prise(s) isolément ou suivant toute(s) combinaison(s) techniquement possible(s) :

- la grandeur statistique est représentative de la dispersion de l'au moins une coordonnée terrain autour de sa valeur annoncée ;
- la grandeur statistique est une grandeur choisie dans le groupe consistant en l'écart-type et des valeurs quantiles de la distribution de l'erreur de localisation, notamment une valeur à n%, telle que la médiane ou la valeur à 90% ;
- le modèle de terrain est muni d'un modèle d'erreur dont la loi de probabilité est connue, on génère par la méthode de Monte-Carlo, à l'aide de la loi de probabilité du modèle d'erreur du modèle de terrain un ensemble d'observations du modèle de terrain de telle manière que cet ensemble obéisse à la loi de probabilité du modèle d'erreur, et chaque fonction de localisation correspond à un tirage Monte Carlo du modèle de terrain ;

- le modèle de terrain est dépourvu de modèle d'erreur, et on déduit exactement une fonction de localisation de la fonction de prise de vue et du modèle de terrain ;
- pour estimer la grandeur statistique :

  - on génère un ensemble d'observations de chacune des grandeurs de telle manière qu'au moins la moyenne et la matrice de covariance de cet ensemble soient respectivement égales à l'espérance et à la matrice de covariance des grandeurs ;
  - on propage cet ensemble d'observations à travers l'au moins une fonction de localisation pour obtenir au moins un ensemble d'observations de l'au moins une coordonnée terrain ;
  - on en déduit une estimation de la grandeur statistique représentative de la loi de probabilité de l'au moins une coordonnée terrain ;

- on estime la grandeur statistique par l'intermédiaire de la méthode de Monte-Carlo, en :

  - générant, à l'aide des lois de probabilité des grandeurs, un ensemble d'observations de chacune des grandeurs, de telle manière que cet ensemble obéisse à la loi de probabilité des grandeurs ;
  - propageant cet ensemble d'observations à travers l'au moins une fonction de localisation pour obtenir au moins un ensemble d'observations de l'au moins une coordonnée terrain ;
  - estimant la loi de probabilité de l'au moins une coordonnée terrain à partir de cet au moins un ensemble d'observations de l'au moins une coordonnée terrain;
  - déduisant la grandeur statistique de la loi de probabilité estimée de l'au moins une coordonnée terrain ;

- l'espérance de chacune des grandeurs et une matrice de covariance des grandeurs étant connues, on estime la grandeur statistique par l'intermédiaire de la méthode sigma points, en :

  - choisissant un ensemble de sigma points, affectés chacun de poids, chaque sigma point constituant une observation de chacune des grandeurs, l'ensemble de sigma points étant choisi de telle manière que l'espérance et la covariance calculées par moyenne pondérée à partir de cet ensemble de sigma points correspondent respectivement à l'espérance et à la matrice de covariance des grandeurs ;

  - propageant cet ensemble d'observations à travers l'au moins une fonction de localisation pour obtenir au moins un ensemble d'observations de l'au moins une coordonnée terrain ; et
  - estimant la grandeur statistique à partir de l'au moins un ensemble d'observations de l'au moins une coordonnée terrain ;

- l'espérance et une matrice de covariance des grandeurs étant connues, on estime la grandeur statistique en :

  - linéarisant la fonction de localisation pour obtenir une fonction de localisation linéarisée autour d'un point considéré ; et
  - obtenant une estimation de l'espérance de l'au moins une coordonnée terrain en calculant le résultat de l'espérance des grandeurs par la fonction de localisation ;
  - obtenant une estimation de la matrice de covariance d'au moins certaines des coordonnées terrain en calculant le résultat de la matrice de covariance des grandeurs par la fonction de localisation linéarisée ;
  - estimant la grandeur statistique à partir de l'espérance de l'au moins une coordonnée terrain et de la matrice de covariance des coordonnées terrain ;

- on met en oeuvre le procédé tel que défini ci-dessus pour chaque point de l'image brute.

L'invention a également pour objet un procédé de détermination d'une erreur de localisation d'un point d'une image géoréférencée, construite à partir d'au moins une image brute, le procédé comprenant les étapes de :

- déterminer un point de coordonnées image de l'une des images brutes à partir duquel le point de l'image géoréférencée a été construit ;
- mettre en oeuvre le procédé de détermination d'une erreur de localisation tel que défini ci-dessus, appliqué au point de l'image brute déterminé à l'étape précédente, l'image brute considérée étant l'image brute à laquelle appartient ledit point de l'image brute déterminé, de manière à déterminer l'erreur de localisation du point de l'image brute;
- déduire de l'erreur de localisation du point de l'image brute l'erreur de localisation du point de l'image géoréférencée construite à partir de l'image brute ;
- l'image géoréférencée est une image orthorectifiée ;
- l'étape de détermination du point de l'image brute correspondant au point de l'image orthorectifiée comprend les sous-étapes consistant à :

- fournir un modèle de terrain reliant entre elles les coordonnées terrain ;
- fournir une fonction de prise de vue associant chaque point de l'image brute à des coordonnées terrain correspondantes, la fonction de prise de vue prenant comme paramètres les grandeurs ; et
- déterminer le point de l'image brute correspondant au point de l'image orthorectifiée à l'aide du modèle de terrain et de la fonction de prise de vue ;

- on met en oeuvre le procédé de détermination de l'erreur de localisation pour chaque point de l'image géoréférencée construite à partir de l'au moins une image brute.

L'invention a également pour objet un dispositif pour déterminer une erreur de localisation d'un point d'une image brute, l'image brute étant géoréférencée, chaque point de l'image brute de coordonnées image dans l'image brute étant associé à des valeurs annoncées de coordonnées terrain définissant la localisation géographique de l'objet représenté par le point de l'image brute ;
le dispositif comprenant :

- des moyens pour fournir une fonction de prise de vue associant chaque point de l'image brute à des coordonnées terrain correspondantes, la fonction de prise de vue prenant comme paramètres des grandeurs dépendant des conditions de prise de l'image brute, les grandeurs ayant une loi de probabilité connue ;
- des moyens pour fournir un modèle de terrain reliant entre elles les coordonnées terrain ;
- des moyens pour déduire à partir de la fonction de prise de vue et du modèle de terrain au moins une fonction de localisation donnant, pour un point de l'image brute donné, au moins certaines des coordonnées terrain de localisation de l'objet représenté par le point de l'image brute en fonction de grandeurs dépendant des conditions de prise de l'image brute, les grandeurs ayant une loi de probabilité connue, le dispositif étant caractérisé en ce qu'il comprend en outre :
- des moyens pour estimer, à l'aide de l'au moins une fonction de localisation appliquée pour le point de coordonnées image de l'image brute et de la loi de probabilité des grandeurs, la valeur d'une grandeur statistique caractéristique d'une loi de probabilité d'au moins l'une des coordonnées terrain associées au point de l'image brute ; et
- des moyens pour déduire de la valeur de la grandeur statistique l'erreur de localisation du point de l'image brute.

L'invention a également pour objet un dispositif de détermination d'une erreur de localisation d'un point d'une image géoréférencée, construite à partir d'au moins une image brute, le dispositif comprenant :

- des moyens pour déterminer un point de coordonnées image de l'une des images brutes à partir duquel le point de l'image géoréférencée a été construit ;
- un dispositif de détermination tel que défini ci-dessus, lequel est propre à déterminer une erreur de localisation du point de l'image brute déterminé par les moyens pour déterminer un point de coordonnées de l'une des images brutes à partir duquel le point de l'image géoréférencée a été construit, l'image brute considérée étant l'image brute à laquelle appartient ledit point ;
- des moyens pour déduire de l'erreur de localisation du point de l'image brute l'erreur de localisation du point de l'image géoréférencée construite à partir de l'image brute.

L'invention sera mieux comprise à la lecture de la description qui va suivre, donnée uniquement à titre d'exemple et faite en se référant aux dessins annexés, sur lesquels :

- la figure 1 illustre un dispositif pour la détermination d'une erreur de localisation ;
- la figure 2 est une représentation schématique de la relation entre une image brute géoréférencée et le terrain ;
- la figure 3 est une représentation schématique du procédé de détermination d'une erreur de localisation selon un premier mode de réalisation ;
- la figure 4 est une représentation schématique du procédé selon une première variante d'un deuxième mode de réalisation ;
- la figure 5 est une représentation schématique du procédé selon une deuxième variante du deuxième mode de réalisation ;
- la figure 6 est une représentation schématique de la relation entre une image orthorectifiée et une image brute correspondante ;

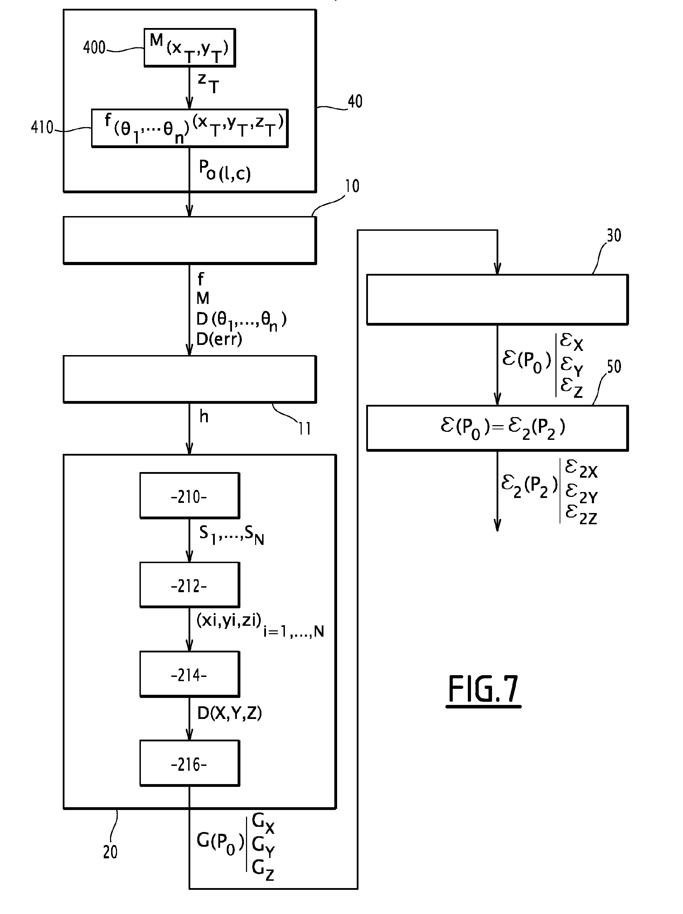

- la figure 7 est une représentation schématique du procédé selon un troisième mode de réalisation ;
- la figure 8 illustre un dispositif pour la détermination d'une erreur de localisation selon le troisième mode de réalisation ;
- la figure 9 est une représentation schématique d'un dispositif de représentation de l'erreur de localisation de chaque point d'une image géoréférencée ;
- la figure 10 est une représentation schématique du procédé de représentation de l'erreur de localisation de chaque point d'une image géoréférencée ;
- la figure 11 est une représentation d'images représentées par le dispositif de la figure 9 selon un mode de réalisation, l'image supérieure étant une image géoréférencée, et l'image inférieure étant une carte d'erreur correspondante ; et
- la figure 12 est une représentation d'une image représentée par le dispositif de la figure 9 selon un autre mode de réalisation, la carte d'erreur étant superposée à l'image géoréférencée.

La localisation géographique d'un point P dans le terrain T est définie par des coordonnées terrain X, Y, Z. Les coordonnées terrain X, Y, Z peuvent être définies dans tout système de coordonnées adapté pour définir la localisation d'un objet dans le terrain T. Classiquement, on peut citer des référentiels euclidiens tels que le référentiel euclidien 3D centré en le centre de la terre, on peut citer les systèmes de coordonnées géographiques où les coordonnées planimétriques sont angulaires sur un ellipsoïde de référence représentant la terre (coordonnées latitude et longitude) et la coordonnée altimétrique est linéaire et mesurée selon la normale locale à l'ellipsoïde de référence en le point considéré, puis finalement on peut citer les systèmes de coordonnées projetés, non euclidiens mais métriques, où les coordonnées planimétriques sont exprimées en mètres, traduites des coordonnées géographiques à l'aide d'une formule de projection, la plupart du temps conforme (par exemple les projections Mercator, Mercator Transverse, Universal Transverse Mercator, projection conique Lambert, projection stéréographique, ...) et où la coordonnée verticale est construite comme pour les référentiels géographiques cités ci-dessus (latitude, longitude, hauteur). Il est à noter que l'on peut changer de repère, euclidien, géographique ou cartographique, sans changer la substance de l'invention. Pour résumer et pour les besoins stricts de l'invention, il suffit d'envisager un triplet de nombres X,Y,Z qui déterminent de façon unique la localisation de tout point de la surface terrestre. Par la suite, ces coordonnées seront appelées coordonnées terrain.

Dans la suite de la description, les coordonnées terrain X, Y, Z sont des coordonnées géographiques, comprenant en particulier des coordonnées planimétriques X, Y et une coordonnée altimétrique Z.

L'image dont on cherche à déterminer l'erreur de localisation est une image géoréférencée, c'est-à-dire que chaque point de l'image est associé à des valeurs annoncées $x_T$, $y_T$, $z_T$ des coordonnées terrain, qui définissent la localisation géographique dans le terrain T de l'objet représenté par ce point de l'image. Ainsi, on associe un point P du terrain de coordonnées $x_T$, $y_T$, $z_T$ à chaque point de l'image géoréférencée.

On appelle erreur de localisation l'erreur sur la localisation d'un point de l'image dans le terrain T. Cette erreur résulte principalement d'incertitudes liées :

(i) au capteur d'observation ; et
(ii) à la connaissance que l'on a sur la représentation de la surface terrestre, autrement dit sur la relation mathématique définissant le terrain, cette relation reliant soit implicitement soit explicitement entre elles les coordonnées X, Y, Z des points de la surface terrestre. Cette relation est appelée par la suite modèle de terrain M. Elle s'exprime de la manière suivante : M(X,Y,Z)=0 ou plus classiquement M(X, Y)=Z.

L'erreur de localisation s'exprime, pour chaque point de l'image, en unités de longueur, par exemple en mètres, autour des coordonnées terrain annoncées, c'est-à-dire autour de la localisation géographique annoncée pour ce point.

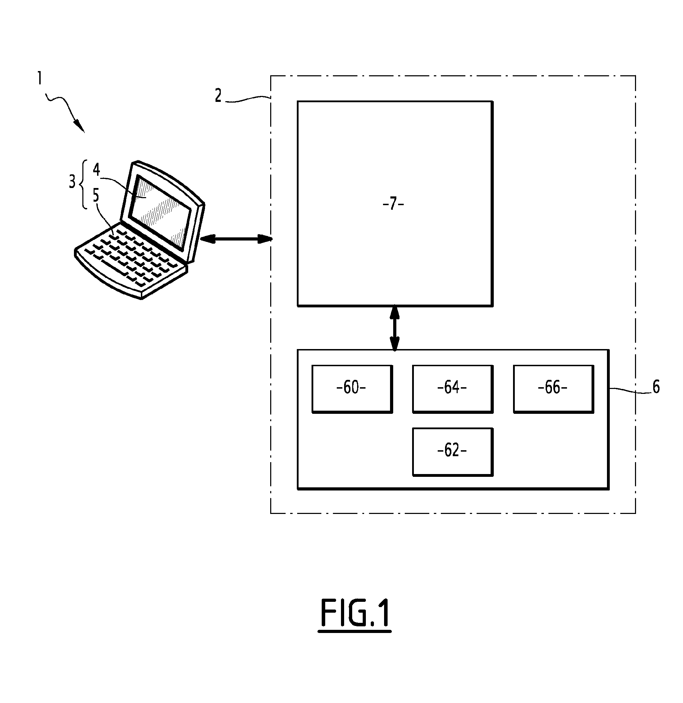

On a représenté sur la figure 1 un dispositif 1 pour la détermination de l'erreur de localisation ε d'un point d'une image géoréférencée. Selon un mode de réalisation, le dispositif 1 comprend une unité de traitement et de stockage 2 et des moyens d'interface 3 entre cette unité 2 et un utilisateur. Les moyens d'interface 3 comprennent un dispositif d'affichage 4, par exemple un écran, et des périphériques d'entrée 5, par exemple une souris et/ou un clavier. Les moyens d'interface 3 sont reliés à l'unité de traitement et de stockage 2 et permettent par exemple à l'utilisateur d'agir sur une image affichée par l'intermédiaire du dispositif d'affichage 4. L'unité de traitement et de stockage 2 comprend un calculateur 6, par exemple un microprocesseur d'un ordinateur mettant en oeuvre un programme et des moyens de stockage 7, par exemple une mémoire de l'ordinateur.

Les étapes du procédé de détermination de l'erreur de localisation sont mises en oeuvre par le dispositif 1 sous la commande du programme d'ordinateur.

Dans un premier mode de réalisation de l'invention, l'image considérée est une image brute $A_0$. L'image brute $A_0$ est de manière classique une image issue directement d'un capteur d'observation sans aucun prétraitement géométrique. Le capteur d'observation utilisé pour acquérir l'image brute $A_0$ peut être de tout type. Il s'agit notamment d'un capteur radar, lidar, infrarouge ou électro-optique ou d'un capteur de vision multispectrale ou hyperspectrale. De tels capteurs sont par exemple intégrés à des satellites d'observation, des drones de reconnaissance, des appareils photos ou embarqués dans des avions.

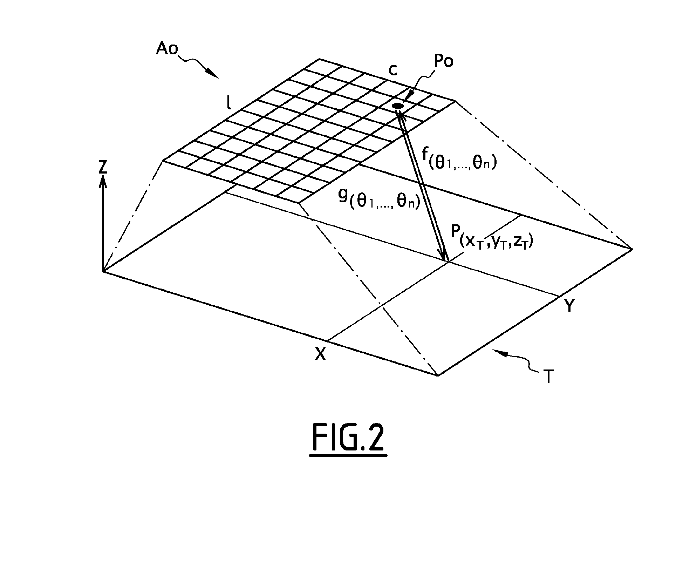

Chaque point $P_0$ de l'image brute $A_0$ est identifié au sein de l'image brute $A_0$ par des coordonnées image I, c définissant sa position dans l'image brute $A_0$. Les valeurs des coordonnées image I, c sont des nombres réels. Comme illustré sur la figure 2, chaque point $P_0$ de l'image brute $A_0$ est associé à une valeur annoncée $x_T$, $y_T$, $z_T$ de chaque coordonnée géographique définissant la localisation géographique de l'objet représenté par le point $P_0$ de l'image brute $A_0$ dans le terrain T. Ainsi, dans une image brute $A_0$ géoréférencée, chaque point $P_0$ est associé à un point P du terrain T de coordonnées $x_T$, $y_T$, $z_T$.

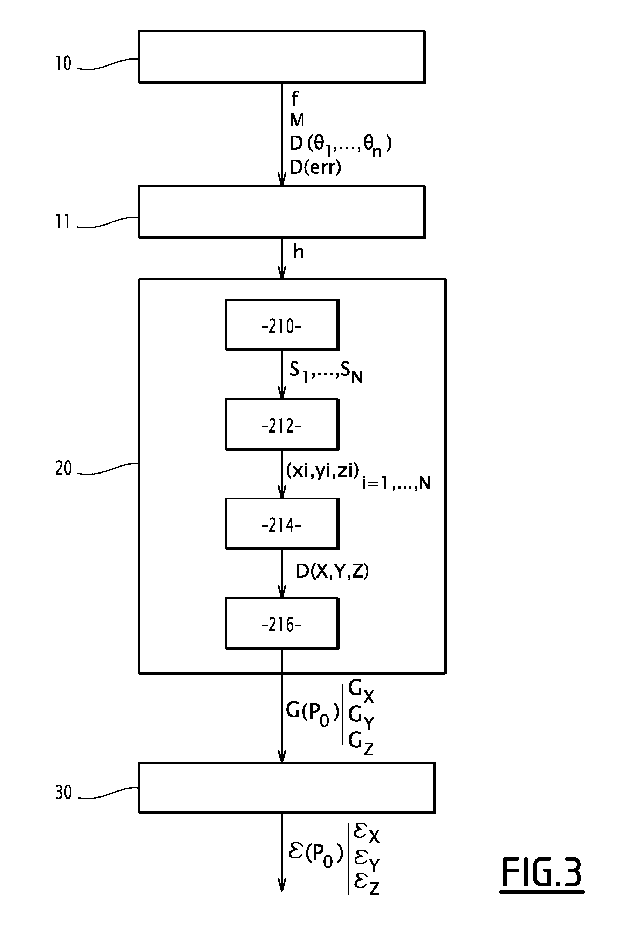

La figure 3 illustre de manière schématique le procédé de détermination de l'erreur de localisation du point $P_0$ de l'image brute $A_0$, ce procédé étant par exemple mis en oeuvre par le dispositif 1 sous la commande du programme d'ordinateur.

Dans une étape 10 du procédé, on fournit une fonction de prise de vue f associée à l'image brute $A_0$, ainsi qu'un modèle de terrain M tel que défini ci-dessus.

La fonction de prise de vue f est une fonction non linéaire. Elle associe au point P de coordonnées géographiques X, Y, Z dans le terrain T un point $P_0$ correspondant de l'image brute $A_0$ de coordonnées I, c dans l'image brute $A_0$. Elle s'exprime de la manière suivante :

$$f_{(\theta_1,...,\theta_n)}(X,Y,Z) = (l,c)\,,$$

où

X, Y et Z sont les coordonnées géographiques du point P du terrain T ;

c et I sont les coordonnées du point $P_0$ correspondant dans l'image brute $A_0$; et $\theta_1$, ..., $\theta_n$ sont des grandeurs dépendant des conditions de prise de vue.

Dans la suite, on nomme vecteur θ le vecteur dont les composantes sont les grandeurs $\theta_1$, ..., $\theta_n$. Ainsi, $\theta = (\theta_1, \theta_2, ..., \theta_n)$. On nomme en outre vecteur de localisation géographique V le vecteur dont les coordonnées sont les coordonnées géographiques X, Y, Z. Ainsi, V = (X, Y, Z).

Les grandeurs $\theta_1$, ..., $\theta_n$ sont des variables aléatoires dont on connaît la loi de probabilité jointe D $(\theta_1, ..., \theta_n)$. La loi jointe $D(\theta_1, ..., \theta_n)$ est soit fournie par le producteur de l'image brute $A_0$, soit déductible par le calculateur 6 à partir des informations fournies par le producteur de l'image brute $A_0$.

Ainsi, le producteur de l'image brute $A_0$ fournit par exemple le type de la loi jointe, ainsi que les moments d'ordre 1 et 2, c'est-à-dire l'espérance de la loi, accompagnée de données d'incertitude généralement sous la forme d'une matrice de covariance des grandeurs $\theta_1, ..., \theta_n$.

Dans le cas où les grandeurs $\theta_1$, ..., $\theta_n$ sont des variables aléatoires indépendantes et identiquement distribuées, les données d'incertitude sont par exemple l'écart-type ou la variance de chaque grandeur $\theta_1, ..., \theta_n$ autour de son espérance.

Dans le cas où la loi de probabilité $D(\theta_1, ..., \theta_n)$ n'est pas fournie, le vecteur θ est supposé être un vecteur gaussien, i.e. où toute combinaison linéaire des variables $\theta_1$, ..., $\theta_n$ suit une loi de Gauss. Dans ce cas, les moments d'ordre 1 et 2 pour chaque variable $\theta_1$, ..., $\theta_n$ suffisent à définir la loi de probabilité jointe sous cette hypothèse gaussienne.

Dans le cadre du procédé selon l'invention, toutes les grandeurs $\theta_1$, ..., $\theta_n$ sont des variables aléatoires. L'invention permet d'intégrer les constantes. Elles sont définies alors par des coefficients nuls dans la matrice de covariance sur les ligne et colonne les concernant.

Les grandeurs $\theta_1$, ..., $\theta_n$ comprennent par exemple des caractéristiques de positionnement du capteur d'observation lors de l'acquisition de l'image brute $A_0$, telles que sa position et son orientation lors de l'acquisition de l'image brute $A_0$, ainsi que des caractéristiques physiques du capteur d'observation ayant acquis l'image brute $A_0$, telles que la taille des matrices réceptrices ou la distance focale.

Les coordonnées géographiques X, Y et Z de localisation du point P du terrain T associé au point $P_0$ de l'image brute $A_0$ dépendent des grandeurs $\theta_1$, ..., $\theta_n$ notamment par l'intermédiaire de la fonction de prise de vue f. Ces coordonnées géographiques X, Y et Z sont donc des variables aléatoires de loi jointe D(X, Y, Z). Les valeurs annoncées $x_T$, $y_T$ et $z_T$ des coordonnées géographiques associées au point $P_0$ dans l'image brute $A_0$ géoréférencée constituent des observations particulières des coordonnées géographiques X, Y et Z.

La fonction de prise de vue f d'une image brute $A_0$ est généralement fournie avec l'image brute $A_0$.

La fonction de prise de vue f est, selon un mode de réalisation, un modèle physique de prise de vue, qui est une traduction directe de la prise de vue du capteur. Des exemples de modèles de prise de vue sont le modèle conique, qui correspond à une matrice de récepteurs CCD ou CMOS et représente la prise de vue classique d'un appareil photo à plan focal, le modèle « pushbroom », qui représente un capteur dans lequel les récepteurs sont organisés le long d'une barrette unidimensionnelle, et le modèle « whiskbroom », qui représente un capteur dans lequel le récepteur est réduit à une cellule dont le mouvement rapide permet de former une image.

En variante, la fonction de prise de vue f est un modèle de remplacement purement analytique. Dans ce cas, les grandeurs $\theta_1$, ..., $\theta_n$ ne sont pas chacune directement liées à un paramètre physique de la prise de vue, comme cela est le cas dans le modèle physique de prise de vue, mais sont traduites dans leur ensemble des conditions de prise de vue par le producteur du modèle de remplacement. Des exemples de modèles de remplacement sont de manière classique le modèle polynôme, le modèle fractions rationnelles ou le modèle grille. Pour ce type de modèle, le producteur fournit une matrice de covariance pour le vecteur θ.

Le modèle de terrain M fourni à l'étape 10 donne, dans le mode de réalisation décrit, pour tout point P du terrain T, la coordonnée altimétrique Z en fonction des coordonnées planimétriques X et Y. Il est muni d'un modèle d'erreur err(X, Y), modélisant l'erreur du modèle de terrain M comme un champ aléatoire dont on connaît la loi de probabilité D(err).

Ainsi, le modèle de terrain M, muni de son erreur err(X, Y) s'exprime de la manière suivante :

$$Z = M(X,Y) + err(X,Y)\,,$$

où

Z est la coordonnée altimétrique d'un point P du terrain T, X et Y sont les coordonnées planimétriques de ce point P,

*err(X,Y)* est l'erreur du modèle de terrain M.

Le modèle de terrain M est par exemple un modèle numérique de surface (MNS) ou un modèle numérique d'élévation (MNE), ces deux modèles donnant des informations de relief relatives au sursol. En variante, il s'agit d'un modèle numérique de terrain (MNT) qui donne des informations de relief relatives au sol nu. Dans les cas les plus pauvres en information de terrain, ce modèle de terrain M peut se réduire à un géoïde terrestre, c'est-à-dire à une équipotentielle du champ de pesanteur terrestre coïncidant avec le niveau moyen des mers, ou bien encore à un simple modèle géométrique de la terre qui peut être soit un ellipsoïde de révolution comme par exemple le « WGS84 » World Geodetic System produit par le National Imagery Mapping Agency (NIMA) américain ou bien une simple sphère de rayon terrestre moyen ou même une modélisation dite de terre plate où la fonction M est constante.

Le champ d'erreur err(X,Y) étant a priori une réalisation quelconque de la loi d'erreur D(err), il sera modélisé par la suite à l'aide de tirages Monte Carlo du modèle de terrain M et pour chaque tirage, l'erreur de terrain sera intégrée dans le modèle M tiré. A cet effet, on génère par la méthode de Monte-Carlo, à l'aide de la loi de probabilité D(err) du modèle d'erreur err(X, Y), un ensemble d'observations du modèle de terrain M de telle manière que cet ensemble obéisse à la loi de probabilité D(err) du modèle d'erreur err(X, Y). Ces tirages de Monte-Carlo sont par exemple réalisés au moyen d'un algorithme fondé sur des méthodes à base de transformée de Fourier.

Le modèle de terrain M tel que fourni classiquement par un producteur de donnée est un cas particulier. Il correspond à la réalisation identiquement nulle du champ d'erreur err(X,Y).

Dans une étape 11 du procédé, on inverse la fonction de prise de vue f par toute méthode adaptée, par exemple par la méthode de lancer de rayon, à l'aide du modèle de terrain M, de manière à obtenir une relation de localisation h.

A cet effet, on résout de manière implicite le système suivant, les coordonnées image I, c du point $P_0$ de l'image brute $A_0$ étant fixées :

$$f_{(\theta_1,...,\theta_n)}(X,Y,M(X,Y)) = (l,c).$$

La relation de localisation h est modélisée comme dépendant d'un champ aléatoire. Chaque réalisation de la relation de localisation h est appelée fonction de localisation g. Chaque fonction de localisation g correspond à une réalisation du champ d'erreur err(X,Y), c'est-à-dire par exemple à un tirage de Monte-Carlo particulier du champ d'erreur err(X, Y).

La relation de localisation h contient implicitement, du fait de son procédé d'obtention, le modèle de terrain M sous l'hypothèse qu'un tirage Monte Carlo du champ d'erreur err(X,Y) du modèle de terrain M ait été effectué.

Chaque fonction de localisation g, c'est-à-dire chaque réalisation de la relation de localisation h, est une fonction non nécessairement linéaire. Elle donne, pour chaque point $P_0$ de l'image brute $A_0$, au moins certaines des coordonnées géographiques X, Y, Z de localisation associées à ce point $P_0$ en fonction des grandeurs $\theta_1$, ..., $\theta_n$ dépendant des conditions de prise de vue. En particulier chaque fonction de localisation g donne, pour chaque point $P_0$ de l'image brute $A_0$, les trois coordonnées géographiques X, Y, Z de localisation associées à ce point $P_0$ en fonction des grandeurs $\theta_1$, ..., $\theta_n$ dépendant des conditions de prise de vue.

Dans une étape 20 du procédé, on estime, pour le point $P_0$ de coordonnées I, c de l'image brute $A_0$, la valeur d'une grandeur statistique G caractéristique de la loi de probabilité D(X, Y, Z) des coordonnées géographiques X, Y, Z associées au point $P_0$ de l'image brute $A_0$ à l'aide de :

- la loi de probabilité $D(\theta_1, ..., \theta_n)$ du vecteur $\theta$ ; et de
- l'une au moins des fonctions de localisation g, la ou chaque fonction de localisation g étant appliquée au point $P_0$ de coordonnées I, c de l'image brute $A_0$. Chaque fonction de localisation g correspond à une réalisation particulière de la relation de localisation h, c'est-à-dire à un tirage de Monte-Carlo donné de l'erreur de terrain err(X, Y).

Avantageusement, on estime la grandeur statistique G à partir de chaque fonction de localisation g obtenue par tirages de Monte-Carlo de l'erreur de terrain err(X, Y).

La grandeur statistique G comprend par exemple une composante $G_X$, $G_Y$, $G_Z$ selon chacune des coordonnées géographiques X, Y, Z. Elle est représentative de la dispersion des coordonnées géographiques X, Y et Z autour de leurs valeurs annoncées respectives $x_T$, $y_T$, $z_T$.

Elle comprend, selon un mode de réalisation, l'écart-type de chacune des coordonnées géographiques X, Y et Z autour de leurs valeurs annoncées respectives $x_T$, $y_T$ et $z_T$. Pour la coordonnée géographique X, cet écart-type est par exemple calculé par la formule :

$$G_X = \sqrt{\frac{1}{n} \times \sum_{i=1}^{n}(x_i - x_T)^2},$$

où

$x_i$ est une observation de la coordonnée géographique X ;

$x_T$ est la valeur annoncée de la coordonnée géographique X ;

n correspond au nombre d'observations effectuées.

L'écart type est calculé de manière analogue pour les coordonnées géographiques YetZ.

Selon des variantes ou en option, d'autres grandeurs statistiques G peuvent être calculées parmi tout l'attirail des indicateurs de dispersion bien connus. On peut citer les critères très utilisés des statistiques d'ordre correspondant aux erreurs à n% où n est compris entre 0 et 100. L'erreur à 50% est appelée médiane et la valeur à 90% est souvent utilisée. La façon classique de les calculer est bien connue de l'homme du métier (par exemple par tri des erreurs et calcul du maximum des erreurs parmi les n% les plus petites).

En variante ou en option, la grandeur statistique G comprend une composante planimétrique $G_P$, représentative de la dispersion des coordonnées planimétriques X et Y autour de leurs valeurs annoncées $x_T$, $y_T$, et une composante altimétrique $G_Z$, représentative de la dispersion de la coordonnée altimétrique Z autour de sa valeur annoncée $z_T$.

Selon le premier mode de réalisation, la grandeur statistique G est estimée pour le point $P_0$ de l'image brute $A_0$ par l'intermédiaire de la méthode de Monte-Carlo, en mettant en place des tirages de Monte-Carlo selon les lois des grandeurs $\theta_1$, ..., $\theta_n$ au travers de l'au moins une fonction de localisation g.

A cet effet, dans une sous-étape 210 de l'étape 20, on génère à l'aide de la loi de probabilité $D(\theta_1, ...,\theta_n)$ du vecteur $\theta$ fournie à l'étape 10 un ensemble de N observations $S_1$, ..., $S_N$ du vecteur $\theta$. Les observations $S_1$, ..., $S_N$ sont choisies par des algorithmes connus de l'homme du métier de manière à ce que l'ensemble des observations $S_1$, ..., $S_N$ obéisse à la loi de probabilité $D(\theta_1, ...,\theta_n)$ du vecteur $\theta$. Ces algorithmes sont par exemple des algorithmes fondés sur les méthodes d'acceptation-rejet ou sur des méthodes à base de chaîne de Markov, ces méthodes étant bien connues de l'homme du métier.

La taille de l'ensemble, c'est-à-dire le nombre N d'observations $S_1$, ..., $S_N$ est choisie par l'homme du métier, notamment en fonction de la précision de l'estimation recherchée et du nombre n de grandeurs $\theta_1$, ..., $\theta_n$, c'est-à-dire de la dimension du vecteur $\theta$. Le nombre N d'observations du vecteur $\theta$ est classiquement supérieur à 1000.

Dans une sous-étape 212 de l'étape 20, on détermine, pour le point $P_0$ de l'image brute $A_0$ de coordonnées I, c données, le résultat de chacune des N observations $S_1$, ..., $S_N$ par l'au moins une fonction de localisation g. Chaque résultat correspond à une observation $x_i$, $y_i$, $z_i$ des coordonnées géographiques X, Y, Z. On obtient ainsi, à l'issue de l'étape 212, un ensemble de N observations $x_i$, $y_i$, $z_i$ des coordonnées géographiques X, Y, Z pour chaque fonction de localisation g. En variante, on obtient un ensemble d'observations $x_i$, $y_i$, $z_i$ des coordonnées géographiques X, Y, Z pour toutes les fonctions de localisation g obtenues par tirages de Monte-Carlo de l'erreur de terrain err(X, Y).

Dans une sous-étape 214 de l'étape 20, on estime la loi de probabilité D(X, Y, Z) des coordonnées X, Y et Z à partir du ou des ensembles d'observations $x_i$, $y_i$ et $z_i$ des coordonnées géographiques X, Y, Z obtenus à la sous-étape 212.

Dans une sous-étape 216 de l'étape 20, on déduit la grandeur statistique G de la loi de probabilité D (X, Y, Z) des coordonnées géographiques X, Y et Z. En particulier, on déduit chacune des composantes $G_X$, $G_Y$, $G_Z$ de la grandeur statistique G relative respectivement à la coordonnée géographique X, Y, Z de la loi de probabilité D(X, Y, Z).

En option, on déduit également les espérances E(X), E(Y) et E(Z) des coordonnées géographiques X, Y, Z de la loi de probabilité D(X, Y, Z).

Dans une étape 30, on déduit de la valeur de la grandeur statistique G l'erreur de localisation $\varepsilon$ du point $P_0$ de l'image brute $A_0$. Selon un mode de réalisation, l'erreur de localisation géographique $\varepsilon$ est identifiée, pour chaque coordonnée géographique X, Y, Z à la composante $G_X$, $G_Y$, $G_Z$ correspondante de la grandeur statistique G déterminée à l'étape 20.

Selon une variante, l'erreur de localisation $\varepsilon$ comprend une composante planimétrique $\varepsilon_p$, dépendant des coordonnées planimétriques X et Y. Cette composante planimétrique est par exemple obtenue à partir des composantes $G_X$ et $G_Y$ de la grandeur statistique G relatives respectivement aux coordonnées planimétriques X et Y déterminées à l'étape 20, par application de la formule suivante : $G_p = \sqrt{G_X^2 + G_Y^2}$ En variante, elle est obtenue directement à partir de la composante planimétrique $G_p$ de la grandeur statistique G.

En option, l'erreur de localisation $\varepsilon$ comprend en outre une composante altimétrique $\varepsilon_Z$ dépendant de la coordonnée altimétrique Z. La composante altimétrique $\varepsilon_Z$ est par exemple identifiée à la composante $G_Z$ de la grandeur statistique G relative à la coordonnée altimétrique Z déterminée à l'étape 20.

Avantageusement, on enregistre la loi de probabilité D(X, Y, Z) des coordonnées géographiques X, Y, Z, associées au point $P_0$, par exemple dans les moyens de stockage 7.

En variante ou en option, on enregistre la grandeur statistique G associée au point $P_0$, par exemple l'écart type des coordonnées géographiques X, Y, Z autour de leurs valeurs annoncées $x_T$, $y_T$, $z_T$. En option, on enregistre en outre les espérances E(X), E(Y) et E(Z) des coordonnées géographiques X, Y, Z.

Avantageusement, les étapes 10 à 30 sont mises en oeuvre pour chaque point $P_0$ de l'image brute $A_0$ de manière à déterminer l'erreur de localisation $\varepsilon$ de chaque point $P_0$ de l'image brute $A_0$ géoréférencée.

La mise en place de tirages de Monte-Carlo du champ d'erreur err(X, Y) du modèle de terrain M améliore la précision de l'estimation de l'erreur de localisation $\varepsilon$, puisque l'erreur estimée tient compte de l'erreur sur le modèle de terrain M.

En outre, l'utilisation de la méthode de Monte-Carlo permet d'obtenir une bonne estimation des lois de probabilité des coordonnées géographiques X, Y et Z. Elle nécessite cependant un nombre de calculs important et demande donc un temps de calcul long.

Le procédé selon un deuxième mode de réalisation ne diffère du procédé selon le premier mode de réalisation qu'en ce que l'erreur de terrain err(X,Y) n'est pas prise en compte. En d'autres termes, on considère que l'erreur sur le modèle de terrain M est nulle. Dans ce cas, on ne réalise pas de tirages de Monte-Carlo sur l'erreur de terrain err(X,Y), c'est-à-dire que la loi de probabilité D(err) est considérée identiquement nulle. Dans ce cas, la relation de localisation h déterminée à l'étape 11 est déterministe. On l'appelle fonction de localisation g. Toutes les autres étapes sont identiques aux étapes du procédé selon le premier mode de réalisation, si ce n'est qu'elles sont appliquées à l'unique fonction de localisation g, plutôt qu'à la pluralité de fonctions de localisation g.

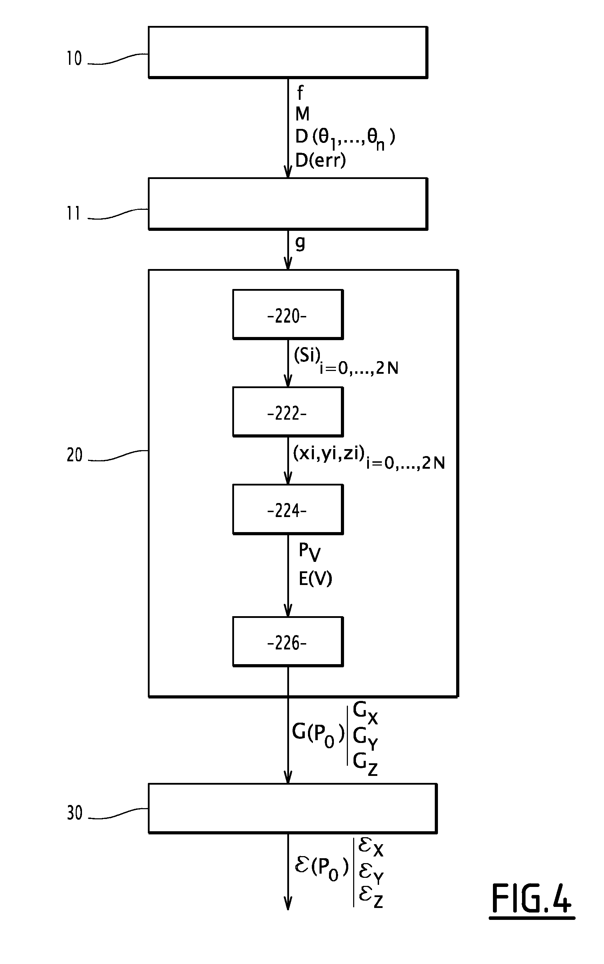

Le procédé de détermination de l'erreur de localisation $\varepsilon$ selon une première variante des premier et deuxième modes de réalisation est illustré sur la figure 4. Il ne diffère des procédés selon le premier et le deuxième mode de réalisation de l'invention que par la méthode d'estimation de la grandeur statistique G utilisée à l'étape 20. En effet, dans la première variante, la grandeur statistique G est estimée par l'intermédiaire d'une méthode fondée sur une approche sigma-point.

A cet effet, dans une sous-étape 220 de l'étape 20, on choisit un ensemble de sigma points $S_i$, où chaque sigma point $S_i$ est une observation du vecteur $\theta$. Des poids $\omega_i^m$ et $\omega_i^c$ sont affectés à chaque sigma point $S_i$. L'ensemble des sigma points $S_i$ est choisi de manière à ce que la moyenne et la matrice de covariance calculées par moyenne pondérée à partir de ces sigma points $S_i$ correspondent respectivement à l'espérance $E(\theta)$ et à la matrice de covariance $P_\theta$ du vecteur $\theta$.

Les sigma points $S_i$ sont générés de manière itérative, par exemple à l'aide des équations suivantes :

$$S_0 = E(\theta)$$

$$S_i = E(\theta) + \varsigma(\sqrt{P_\theta})_i \quad \text{pour i=1,\ldots,n}$$

$$S_i = E(\theta) - \varsigma(\sqrt{P_\theta})_i \text{ pour i=n+1,\ldots,2n}$$

où
$\varsigma$ est un facteur d'échelle scalaire qui détermine la dispersion des sigma points $S_i$ autour de l'espérance $E(\theta)$

du vecteur $\theta$ ; $(\sqrt{P_\theta})_i$ désigne la $i^{ème}$ colonne de la racine carrée de la matrice de covariance $P_\theta$.

Les valeurs du facteur d'échelle $\varsigma$ et des poids $\omega_i^{m,c}$ dépendent du type d'approche sigma-point utilisée. Selon un mode de réalisation, on utilise la transformation sans parfum (« unscented transformation » en anglais) comme type d'approche sigma-point. La méthode pour choisir les sigma points $S_i$ à l'aide de la transformation sans-parfum est connue de l'homme du métier, et est notamment décrite dans l'article Sigma-Point Kalman Filters for Probabilistic Inference in Dynamic State-Space Models, Rudolph van der Merwe, PhD Thesis, Avril 2004. Tout autre type d'approche sigma-point adapté peut également être utilisé dans le cadre du procédé selon l'invention.

Dans une sous-étape 222 du procédé selon la première variante, on propage les sigma-points $S_i$ choisis à l'étape 220 à travers la fonction de localisation g.

A cet effet, on utilise par exemple les équations suivantes :

$$V_i = g(S_i)$$

$$E(V) \approx \sum_{i=0}^{2L} \omega_i^m Vi$$

$$P_V \approx \sum_{i=0}^{2L} \sum_{j=0}^{2L} \omega_{i,j}^c v_i v_j^T$$

où $\omega_i^m$ et $\omega_i^c$ sont des poids scalaires dont la valeur dépend du type de d'approche sigma point utilisée.

On obtient ainsi un ou plusieurs ensembles d'observations $x_i$, $y_i$, $z_i$ des coordonnées géographiques X, Y, Z.

On obtient en outre la matrice de covariance $P_V$ des coordonnées géographiques X, Y, Z et optionnellement l'espérance E(X), E(Y), E(Z) de chacune des coordonnées géographiques X, Y, Z.

En option, on estime, dans une sous-étape 224, une matrice de covariance P des coordonnées planimétriques X, Y à partir du bloc extrait de la matrice $P_V$ correspondant aux coordonnées X,Y et, optionnellement, l'espérance E(X), E(Y) de chacune des coordonnées planimétriques X et Y. On estime en outre dans cette sous-étape 224 la variance de la coordonnée altimétrique Z à partir du terme diagonal $P_{v3,3}$ correspondant de la matrice de covariance $P_v$.

Dans une sous-étape 226, on estime la grandeur statistique G à partir de l'ensemble d'observations $x_i$, $y_i$, $z_i$ des coordonnées géographiques X, Y, Z, et en particulier à partir de la matrice de covariance $P_v$. L'écart-type de chaque coordonnée géographique X, Y, Z est alors déduit des racines carrées des valeurs de la diagonale de la matrice $P_v$.

Dans le cas où l'on estime la grandeur statistique planimétrique $G_p$ relative aux coordonnées planimétriques X et Y, on utilise la formule :

$$G_p = \sqrt{Pv_{1,1} + Pv_{2,2}} \;,$$

où $P_{V1,1}$ et $P_{V2,2}$ correspondent respectivement aux termes diagonaux de la matrice $P_v$ relatifs à la coordonnée géographique X et à la coordonnée géographique Y.

La composante altimétrique $G_Z$ de la grandeur statistique G correspond à la racine carrée du terme diagonal $P_{v3,3}$ de la matrice $P_v$ relatif à la coordonnée géographique altimétrique Z.

A l'étape 30, l'erreur de localisation $\varepsilon$ est déduite de la grandeur statistique G de la même manière que dans le premier ou le deuxième mode de réalisation.

L'utilisation de la méthode basée sur l'approche sigma point présente l'avantage de donner une approximation correcte de l'espérance et de la variance des coordonnées géographiques X, Y, Z pour un temps de calcul instantané.

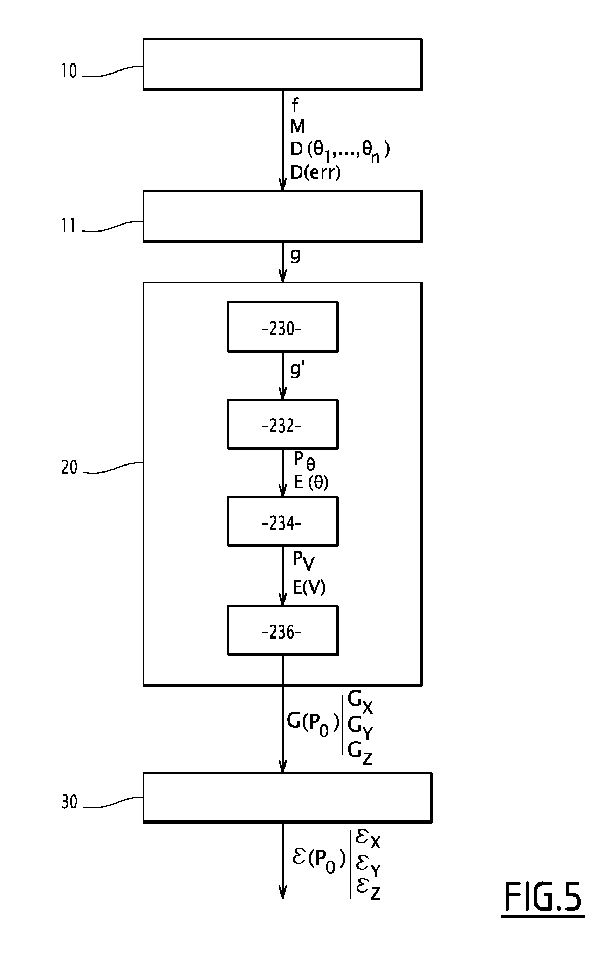

Le procédé de détermination selon une deuxième variante, illustré sur la figure 5, ne diffère du procédé selon le premier ou le deuxième mode de réalisation de l'invention que par la méthode d'estimation de la grandeur statistique G utilisée à l'étape 20. En effet, dans la deuxième variante, la grandeur statistique G est estimée par linéarisation de la fonction de localisation g.

A cet effet, dans une sous-étape 230 de l'étape 20, on linéarise la fonction de localisation g pour obtenir une fonction de localisation linéarisée g' autour du point $\theta$ considéré.

Dans une sous-étape 232, on fournit ou on détermine, à partir de la loi de probabilité $D(\theta_1,...,\theta_n)$ du vecteur $\theta$, la matrice de covariance $P_\theta$ du vecteur $\theta$, et optionnellement l'espérance $E(\theta)$.

Dans une sous-étape 234, on propage la matrice de covariance $P_\theta$ à travers la fonction de localisation linéarisée g'. A cet effet, on utilise par exemple l'équation :

$$P = \nabla g P_\theta (\nabla g)^T$$

où $\nabla g$ est le gradient de g.

On obtient ainsi une estimation de la matrice de covariance $P_v$ des coordonnées géographiques X ,Y et Z.

En option, à la sous-étape 234, on propage l'espérance $E(\theta)$ du vecteur $\theta$ à travers la fonction de localisation g selon l'équation $\begin{pmatrix} E(X) \\ E(Y) \\ E(Z) \end{pmatrix} = g(E_\theta)$ où E(X), E(Y) et E(Z) sont les espérances des coordonnées planimétriques X et Y et altimétrique Z.

On obtient ainsi une estimation de l'espérance E(X), E(Y), E(Z) de chacune des coordonnées géographiques X, Y et Z.

Dans une sous-étape 236, on déduit la grandeur statistique G de la matrice de covariance $P_v$ des coordonnées géographiques X, Y et Z. La grandeur statistique G comprend en particulier l'écart-type de chacune des coordonnées géographiques X, Y et Z autour de sa valeur annoncée respective $x_T$, $y_T$ et $z_T$.

On déduit cette grandeur statistique G à partir de la matrice de covariance $P_v$ de la même manière que dans la première variante.

A l'étape 30, l'erreur de localisation $\varepsilon$ est déduite de la grandeur statistique G de la même manière que dans le deuxième mode de réalisation.

Le procédé selon la deuxième variante présente l'avantage d'être plus rapide à mettre en oeuvre que les procédés selon les premier et deuxième modes de réalisation et selon la première variante. En revanche, l'erreur de localisation obtenue est moins précise du fait de l'utilisation de la fonction de localisation linéarisée g'.

Les procédés selon la première et la deuxième variante sont avantageusement mis en oeuvre en tant que variantes du procédé selon le deuxième mode de réalisation, dans lequel on ne tient pas compte de l'erreur du modèle de terrain.

Dans le premier et le deuxième mode de réalisation, ainsi que dans les première et deuxième variantes, on a estimé la grandeur statistique G et l'erreur de localisation $\varepsilon$ relativement aux deux coordonnées géographiques planimétriques X, Y et à la coordonnée géographique altimétrique Z ou relativement à une combinaison des coordonnées planimétriques X et Y.

En variante, on estime la grandeur statistique G et l'erreur de localisation $\varepsilon$ relativement à seulement certaines des coordonnées géographiques X, Y, Z, en particulier relativement à une ou à deux de ces coordonnées. En effet, dans certains cas, il n'est pas indispensable de disposer d'une information sur l'erreur de localisation suivant chacune des coordonnées géographiques.

Dans le cas où l'on utilise un système de coordonnées différent pour localiser un point P dans le terrain T, la grandeur statistique G et l'erreur de localisations $\varepsilon$ sont calculées relativement à au moins l'une de ces coordonnées, et par exemple relativement à chacune de ces coordonnées ou relativement à des combinaisons de ces coordonnées.

Le dispositif 1 illustré sur la figure 1 est propre à mettre en oeuvre le procédé selon le premier mode de réalisation, le deuxième mode de réalisation ou selon les premières ou deuxième variantes.

A cet effet, il comprend des moyens 60 pour fournir la fonction de prise de vue f, le modèle de terrain M, la loi de probabilité $D(\theta_1, ..., \theta_n)$ des grandeurs $(\theta_1, ..., \theta_n)$ ainsi que l'éventuelle loi de probabilité $D(err)$ du champ d'erreur $err(X,Y)$ du modèle de terrain M considéré. Ces moyens 60 sont intégrés au calculateur 6, la fonction de prise de vue f, le modèle de terrain M, ainsi que la loi de probabilité $D(\theta_1, ..., \theta_n)$ des grandeurs $(\theta_1, ..., \theta_n)$, et la loi de probabilité $D(err)$ du champ d'erreur $err(X,Y)$ du modèle de terrain M étant par exemple stockés dans des bases de données dans les moyens de stockage 7.

Le dispositif 1 comprend en outre :

- des moyens 62 pour déduire une relation de localisation h à partir de la fonction de prise de vue f et à l'aide du modèle de terrain M ;
- des moyens 64 pour estimer, à l'aide de l'au moins une fonction de localisation g appliquée pour le point $P_0$ de coordonnées image l,c de l'image brute $A_0$ et de la loi de probabilité $D(\theta_1, ..., \theta_n)$ des grandeurs $\theta_1, ..., \theta_n$, la valeur de la grandeur statistique G caractéristique de la loi de probabilité $D(X, Y, Z)$ d'au moins l'une des coordonnées géographiques X,Y,Z associées au point $P_0$ de l'image brute $A_0$ ; et
- des moyens 66 pour déduire de la valeur de la grandeur statistique G l'erreur de localisation géographique $\varepsilon$ du point $P_0$ de l'image brute $A_0$.

Les moyens 62, 64 et 66 sont intégrés au calculateur 6 de l'unité de traitement et de stockage 2.

Les moyens de stockage 7 comprennent notamment les coordonnées image I, c définissant la position de chaque point $P_0$ dans l'image brute $A_0$, les valeurs annoncées $X_T$, $y_T$, $Z_T$ des coordonnées géographiques correspondant à chaque point $P_0$ dans l'image brute $A_0$, ainsi que l'une ou plusieurs des données suivantes : la fonction de prise de vue f et/ou le modèle de terrain M accompagné de son champ d'erreur $err(X,Y)$.

Le procédé de détermination décrit en référence au premier mode de réalisation, au deuxième mode de réalisation, ainsi qu'à ses première et deuxième variantes, ainsi que le dispositif associé présentent l'avantage de permettre l'évaluation de l'erreur de localisation en chaque point de l'image brute géoréférencée. L'erreur de localisation estimée tient ainsi compte de la variabilité spatiale de l'erreur de localisation. En outre, l'utilisation des méthodes statistiques d'estimation décrites ci-dessus permet d'obtenir une estimation précise de l'erreur, malgré la non linéarité de la ou chaque fonction de localisation. Dans le cas où l'on tient compte du champ d'erreur du modèle de terrain, la précision de l'estimation statistique de l'erreur de localisation est améliorée, puisqu'elle tient compte également des incertitudes provenant de ce modèle. Enfin, l'erreur de localisation est estimée pour chaque point sans faire appel à des points d'appui dont les coordonnées géographiques sont connues avec certitude. Ainsi, elle peut également être calculée pour des points d'images brutes acquises dans des zones dans lesquelles on ne dispose pas de points d'appui de coordonnées géographiques connues.

Dans un troisième mode de réalisation de l'invention, l'image géoréférencée est une image géoréférencée $A_2$ construite à partir d'une ou plusieurs images brutes $A_0$.

Dans ce qui suit, l'image géoréférencée est une image orthorectifiée $A_2$, encore appelée orthoimage, construite à partir de l'image brute $A_0$ ou d'une pluralité d'images brutes $A_0$.

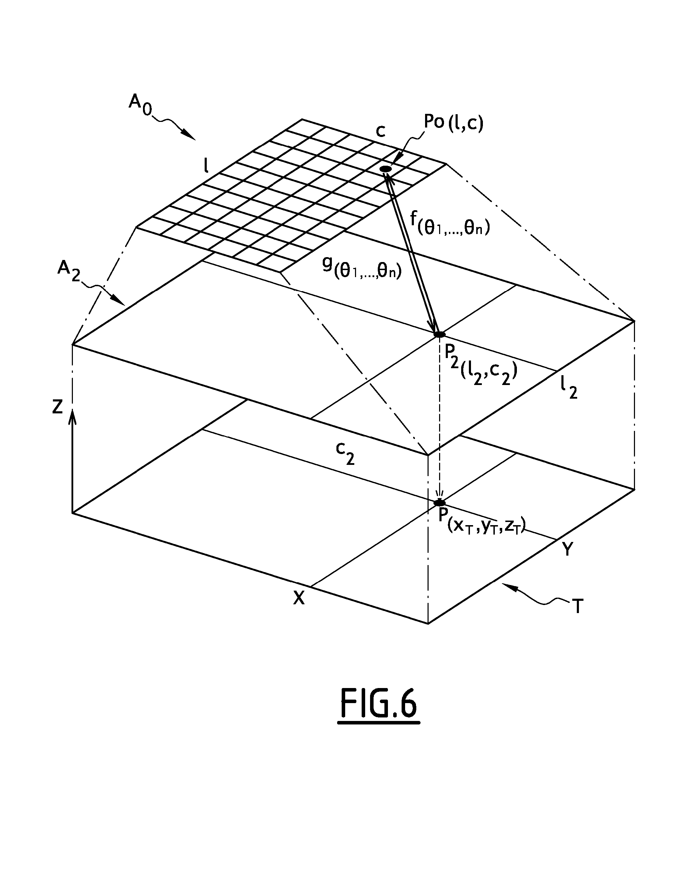

La figure 6 illustre les relations entre l'image orthorectifiée $A_2$, le terrain T et une image brute $A_0$ à partir de laquelle l'image orthorectifiée $A_2$ a été construite.

De manière classique, une image orthorectifiée est une image qui a été filtrée de l'influence du relief visualisé. Sa géométrie a été redressée de sorte que chaque point soit superposable à une carte plane qui lui correspond. En d'autres termes, elle semble être prise à la verticale de tous les points P du terrain T qu'elle représente, ces points P étant situés sur un terrain parfaitement plat; en particulier l'échelle d'une image orthorectifiée est uniforme sur toute l'image.

L'image orthorectifiée $A_2$ est construite, de manière connue, à partir d'une ou plusieurs images brutes $A_0$. Elle comprend des points $P_2$, chaque point $P_2$ étant identifié au sein de l'image orthorectifiée $A_2$ par des coordonnées $I_2$, $c_2$ définissant sa position dans l'image orthorectifiée $A_2$. Par construction, les valeurs $I_2$, $c_2$ des coordonnées de chaque point $P_2$ de l'image orthorectifiée $A_2$ correspondent aux valeurs annoncées $x_T$, $y_T$ des coordonnées planimétriques définissant la localisation géographique de l'objet représenté par le point $P_2$ dans le terrain T à l'aide d'une correspondance bilinéaire. La valeur annoncée $Z_T$ de la coordonnée altimétrique correspondant au point $P_2$ de l'image orthorectifiée $A_2$ est obtenue à l'aide du modèle de terrain M. Ainsi, l'image orthorectifiée $A_2$ est par nature une image géoréférencée dont la fonction de prise de vue f est une simple fonction linéaire.

Le procédé selon le troisième mode de réalisation est un procédé de détermination de l'erreur de localisation $\varepsilon_2$ d'un point $P_2$ de l'image orthorectifiée $A_2$.

Dans le cadre de ce procédé, le producteur de l'image géoréférencée $A_2$ fournit:

- la fonction de prise de vue f associée à la ou chaque image brute $A_0$ ;
- la loi de probabilité $D(\theta_1, ...,\theta_n)$ des grandeurs $\theta_1, ..., \theta_n$ dépendant des conditions de prise de la ou chaque image brute $A_0$ ;
- le modèle de terrain M, ainsi que la loi de probabilité $D(err)$ de son champ d'erreur $err(X,Y)$ éventuel.

Le calculateur 6 déduit ensuite la relation de localisation h à partir de la fonction de prise de vue f et à l'aide du modèle de terrain M.

Dans une étape 40 du procédé selon le troisième mode de réalisation, on détermine le point $P_0$ de l'image brute $A_0$ à partir duquel le point $P_2$ de l'image orthorectifiée $A_2$ a été construit.

A cet effet, dans une sous-étape 400, on détermine, à l'aide du modèle de terrain M, dans lequel l'erreur de terrain $err(X, Y)$ a été prise égale à zéro et des valeurs annoncées $X_T$, $y_T$ des coordonnées planimétriques identiques par construction aux coordonnées $I_2$, $c_2$ du point $P_2$, la valeur annoncée $Z_T$ de la coordonnée altimétrique correspondant au point $P_2$ de l'image orthorectifiée $A_2$. On obtient ainsi les valeurs annoncées $X_T$, $y_T$, $Z_T$ des coordonnées géographiques définissant la localisation géographique du point $P_2$.

Dans une sous-étape 410, on applique la fonction de prise de vue f à chaque point $P_2$ de l'image orthorectifiée $A_2$, c'est-à-dire aux valeurs annoncées $X_T$, $y_T$, $Z_T$ des coordonnées géographiques de manière à obtenir les valeurs des coordonnées I, c du point $P_0$ de l'image brute $A_0$ correspondant. Lors de l'application de la fonction de prise de vue f, on identifie les grandeurs $\theta_1$, ..., $\theta_n$ à leurs espérances indiquées par le producteur de l'image brute $A_0$.

Ainsi, à l'issue de l'étape 40, on a déterminé le point $P_0$ de l'image brute $A_0$ à partir duquel a été construit le point $P_2$ de l'image orthorectifiée $A_2$, c'est-à-dire le point $P_0$ de l'image brute $A_0$ correspondant au point $P_2$ de l'image orthorectifiée $A_2$ considéré. Dans ce contexte, les valeurs I, c des coordonnées du point $P_0$ sont des nombres réels non nécessairement entiers.

A l'issue de l'étape 40, on applique les étapes 10, 11, 20 et 30 du procédé selon le premier mode de réalisation, le deuxième mode de réalisation et ses première ou deuxième variantes au point $P_0$ de l'image brute $A_0$ correspondant au point $P_2$ de l'image orthorectifiée $A_2$ déterminé à l'étape 40.

A l'issue de l'étape 30, on a obtenu une estimation de l'erreur de localisation $\varepsilon$ du point $P_0$ de l'image brute $A_0$ à partir duquel a été construit le point $P_2$ de l'image orthorectifiée $A_2$.

Dans une étape 50 du procédé, on identifie l'erreur de localisation du point $P_0$ de l'image brute $A_0$ à l'erreur de localisation $\varepsilon_2$ du point $P_2$ de l'image orthorectifiée $A_2$.

En option, on reproduit les étapes 10 à 50 pour chaque point $P_2$ de l'image orthorectifiée $A_2$. On obtient ainsi l'erreur de localisation $\varepsilon_2$ de chaque point $P_2$ de l'image orthorectifiée $A_2$.

Le procédé selon le troisième mode de réalisation a été expliqué pour une image orthorectifiée $A_2$. Le procédé s'applique de la même manière pour tout type d'image géoréférencée, construite à partir d'une ou plusieurs images brutes, sous réserve que l'on soit capable de faire correspondre à chaque point de l'image géoréférencée un point d'une image brute à partir duquel il a été construit.

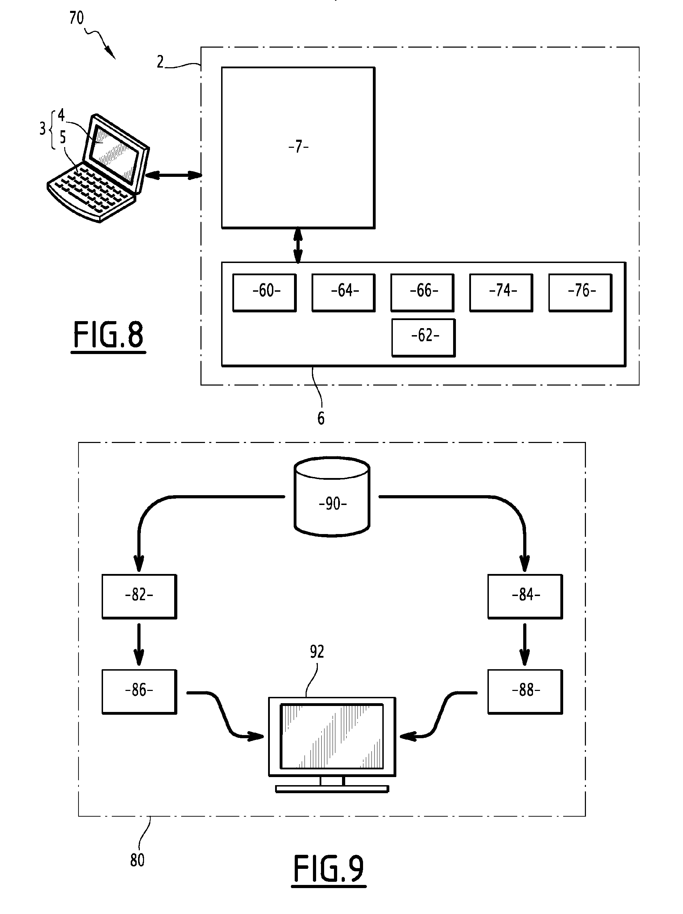

La figure 8 illustre un dispositif 70 pour la détermination de l'erreur de localisation d'un point $P_2$ de l'image géoréférencée $A_2$. Ce dispositif 70 ne diffère du dispositif 1 illustré sur la figure 1 qu'en ce qu'il comprend en outre :

- des moyens 74 pour déterminer un point $P_0$ de coordonnées I, c de l'une des images brutes $A_0$ à partir duquel le point $P_2$ de l'image géoréférencée $A_2$ a été construit ;
- des moyens 76 pour déduire l'erreur de localisation $\varepsilon_2$ du point $P_2$ de l'image géoréférencée $A_2$ de l'erreur de localisation géographique $\varepsilon$ du point $P_0$ de l'image brute $A_0$.

Les moyens 74 et 76 sont intégrés au calculateur 6 de l'unité de traitement et de stockage 2. Dans ce cas, les moyens de stockage 7 comprennent en outre les coordonnées $I_2$, $c_2$ définissant la position de chaque point $P_2$ dans l'image géoréférencée $A_2$, qui est en particulier une image orthorectifiée.

Le dispositif 70 est ainsi propre à mettre en oeuvre en outre les étapes 40 et 50 du procédé selon le troisième mode de réalisation sous la commande d'un programme d'ordinateur adapté.

Le procédé de détermination décrit en référence au troisième mode de réalisation, ainsi que le dispositif associé présentent l'avantage de permettre l'évaluation de l'erreur de localisation en chaque point d'une image géoréférencée construite à partir d'une image brute, et en particulier d'une image orthorectifiée. L'erreur de localisation estimée tient ainsi compte de la variabilité spatiale de l'erreur de localisation. En outre, l'utilisation des méthodes statistiques d'estimation décrites ci-dessus permet d'obtenir une estimation précise de l'erreur, malgré la non linéarité de la fonction de localisation. Enfin, dans le cas où l'on tient compte du modèle statistique de l'erreur de terrain, l'erreur de localisation estimée tient compte également des incertitudes provenant du modèle de terrain.

L'invention a également pour objet un dispositif 80 de représentation de l'erreur de localisation $\varepsilon_3$ d'une pluralité de points $P_3$ d'une image géoréférencée $A_3$. Ce dispositif 80 est représenté de manière schématique sur la figure 9. Il comprend:

- des moyens 82 pour fournir l'image géoréférencée $A_3$ à représenter;
- des moyens 84 pour fournir, pour chaque point d'une pluralité de points $P_3$ de l'image géoréférencée $A_3$, une valeur estimée de l'erreur de localisation $\varepsilon_3$ propre à ce point $P_3$, cette erreur étant non uniforme sur l'image $A_3$;
- des moyens 86 pour représenter l'image géoréférencée $A_3$; et
- des moyens 88 pour représenter l'erreur de localisation $\varepsilon_3$ pour au moins un point parmi la pluralité

de points $P_3$ de l'image géoréférencée $A_3$, et avantageusement pour chaque point de la pluralité de point $P_3$, de manière à permettre la visualisation de l'erreur de localisation par un utilisateur.

L'image géoréférencée $A_3$ à représenter est enregistrée dans une base de données 90. La base de données 90 est par exemple stockée dans un moyen de stockage, tel qu'une mémoire d'un ordinateur. Elle associe à chaque point $P_3$ de l'image géoréférencée $A_3$ de coordonnées $I_3$, $c_3$ dans l'image géoréférencée $A_3$:

- les valeurs annoncées $X_T$, $y_T$, $Z_T$ des coordonnées géographiques correspondantes, définissant la localisation dans le terrain T de l'objet représenté par le point $P_3$;
- une valeur V attribuée à ce point $P_3$, par exemple une valeur d'intensité ou de radiométrie, cette valeur V étant représentative de l'objet représenté par le point $P_3$; et
- l'erreur de localisation $\varepsilon_3$ propre à ce point $P_3$.

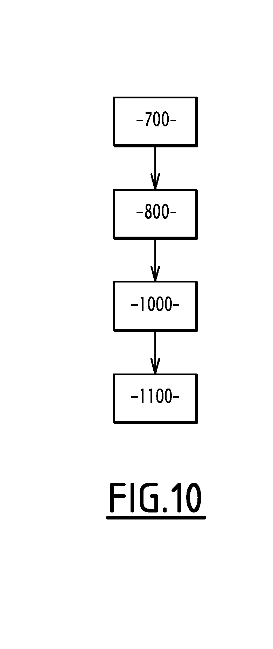

La figure 10 représente de manière schématique le procédé de représentation de l'erreur de localisation $\varepsilon_3$ en au moins une pluralité de points $P_3$ de l'image géoréférencée $A_3$.

Dans une étape 700 de ce procédé, les moyens 82 pour fournir l'image géoréférencée $A_3$ fournissent l'image géoréférencée $A_3$, par exemple à la requête d'un utilisateur. A cet effet, ils se connectent à la base de données 90 et en extraient des données relatives à l'image géoréférencée $A_3$, en particulier, ils extraient, pour chaque point $P_3$ de l'image géoréférencée $A_3$, les valeurs annoncées $X_T$, $y_T$, $z_T$ des coordonnées géographiques correspondantes, ainsi que la valeur V attribuée à ce point $P_3$.

Dans une étape 800, ils fournissent les données extraites de la base de données 90 aux moyens 86 pour représenter l'image géoréférencée $A_3$. Ces moyens 86 représentent alors l'image géoréférencée $A_3$ de manière à permettre sa visualisation par l'utilisateur. A cet effet, les moyens 86 affichent par exemple l'image géoréférencée $A_3$ sur un écran d'affichage 92 ou impriment l'image géoréférencée $A_3$.

Dans une étape 1000, les moyens 84 de fourniture de la valeur estimée de l'erreur de localisation $\varepsilon_3$ se connectent à la base de données 90 et en extraient, pour au moins une pluralité de points $P_3$ de l'image géoréférencée $A_3$, et avantageusement pour chaque point $P_3$ de l'image géoréférencée $A_3$ la valeur estimée de l'erreur de localisation $\varepsilon_3$ correspondant à chacun desdits points $P_3$.

Dans une étape 1100, les moyens 88 de représentation de l'erreur de localisation représentent l'erreur de localisation $\varepsilon_3$ correspondant à chaque point $P_3$ et fournie par les moyens 84 à l'étape 1000. A cet effet, ils produisent par exemple une carte d'erreur C représentant, pour chaque point $P_3$ de l'image géoréférencée $A_3$

la valeur estimée de l'erreur de localisation $\varepsilon_3$. Dans la carte d'erreur C, l'erreur de localisation $\varepsilon_3$ est par exemple codée par la couleur attribuée au point $P_3$ correspondant. Ainsi, on fait correspondre un niveau de couleur à chaque valeur ou plage de valeurs possibles de l'erreur de localisation $\varepsilon_3$. Le codage des couleurs est par exemple réalisé par une fonction informatique de type « colormap », cette fonction faisant correspondre une nuance de couleur à chaque valeur possible de l'erreur de localisation $\varepsilon_3$. L'échelle des couleurs peut par exemple s'étendre du vert au rouge, le vert représentant des zones de l'image $A_3$ dans lesquelles l'erreur de localisation $\varepsilon_3$ est inférieure à un premier seuil, par exemple inférieure à la distance typique dans le terrain T entre deux pixels consécutifs de l'image $A_3$, le rouge représentant des zones de l'image $A_3$ dans lesquelles l'erreur de localisation $\varepsilon_3$ est supérieure à un deuxième seuil, par exemple supérieure à 10 fois le premier seuil, et le jaune représentant des zones intermédiaires, dans lesquelles l'erreur de localisation $\varepsilon_3$ est comprise entre le premier seuil et le deuxième seuil. Ces valeurs de seuil sont à définir en fonction des besoins liés à l'application considérée. Il est également possible de traduire l'histogramme des erreurs de localisation $\varepsilon_3$ avec des quantiles statistiques.

En variante, l'erreur de localisation $\varepsilon_3$ est codée en niveaux de gris, l'intensité d'un point étant par exemple d'autant plus faible que l'erreur de localisation $\varepsilon_3$ est élevée.

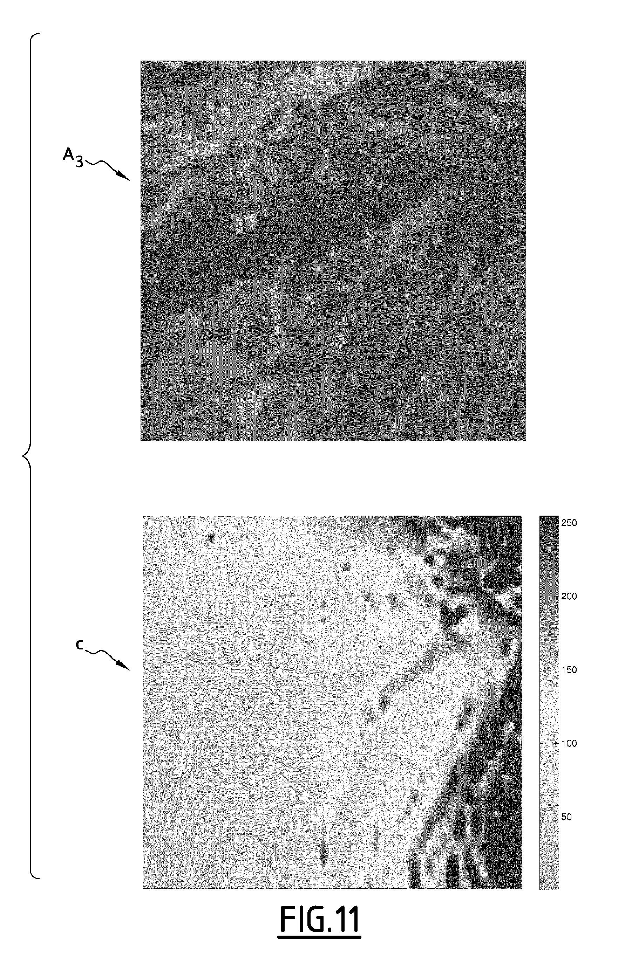

Les moyens 88 de représentation de l'erreur de localisation représentent la carte d'erreur C, par exemple en l'affichant sur l'écran d'affichage 92, avantageusement à proximité de l'image géoréférencée $A_3$, en particulier sous l'image géoréférencée $A_3$, comme cela est représenté sur la figure 11, de manière à permettre à l'utilisateur de visualiser simultanément l'image géoréférencée $A_3$ et la carte d'erreur C correspondante. Selon une variante, les moyens de représentation 88 impriment la carte d'erreur C.

Le code couleurs ou niveaux de gris utilisé pour coder le niveau de l'erreur de localisation $\varepsilon_3$ en chaque point de l'image géoréférencée $A_3$ présente l'avantage de permettre à un utilisateur d'avoir une vision synthétique de la variabilité de l'erreur de localisation $\varepsilon_3$ sur l'image géoréférencée $A_3$.

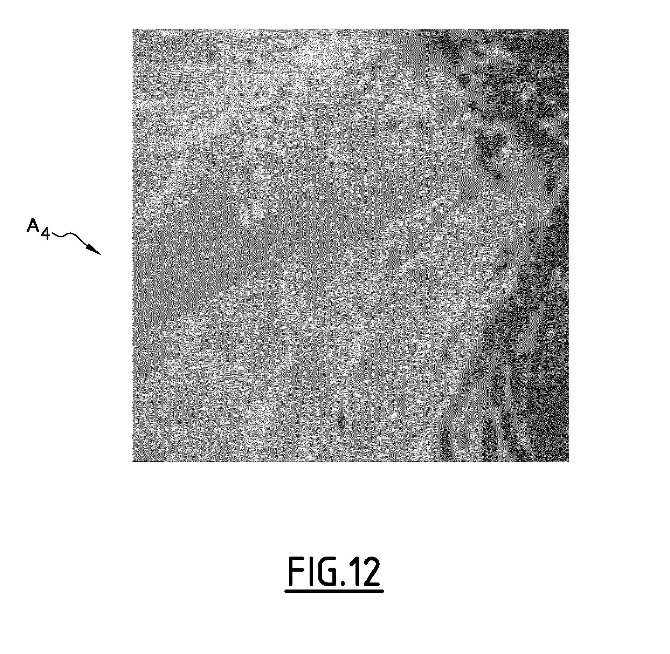

Selon la deuxième variante représentée sur la figure 12, les moyens 88 de représentation de l'erreur de localisation $\varepsilon_3$ représentent la carte d'erreur C en la superposant à l'image géoréférencée $A_3$ de manière à former une image combinée $A_4$. Dans ce cas, dans l'image combinée $A_4$, l'erreur de localisation est représentée par un premier paramètre, par exemple la nuance de couleur, tandis que la valeur V (valeur radiométrique ou intensité) du point correspondant de l'image géoréférencée $A_3$ est représentée par un deuxième paramètre, par exemple le niveau de gris. En outre, le dispositif 80 comprend des moyens d'ajustement de la transparence de la carte d'erreur C superposée à l'image géoréférencée

$A_3$. Selon cette variante, la carte d'erreur C est représentée superposée à l'image géoréférencée $A_3$ de manière permanente. Alternativement, elle est représentée de manière intermittente sur l'image géoréférencée $A_3$. A cette effet, elle est par exemple affichée sur l'image géoréférencée $A_3$ de manière clignotante, avec une fréquence de clignotement supérieure à 0,5 Hertz et inférieure à 20 Hz de manière à induire une rémanence de la carte d'erreur C sur la rétine d'un utilisateur dans l'intervalle de clignotement.

Les étapes 1000 et 1100 sont par exemple mises en oeuvre simultanément aux étapes 700 et 800.

Le procédé selon le deuxième mode de réalisation ne diffère du procédé selon le premier mode de réalisation que par les étapes décrites ci-dessous.

Dans une étape 1200, mise en oeuvre après l'étape 800 de représentation de l'image géoréférencée $A_3$, et avant l'étape 1000, l'utilisateur sélectionne un point $P_3$ de l'image géoréférencée $A_3$, par exemple à l'aide d'un pointeur d'une souris ou par une saisie par l'intermédiaire d'un clavier d'ordinateur.

Lors de l'étape 1000, les moyens 84 de fourniture de la valeur estimée de l'erreur de localisation $\varepsilon_3$ extraient de la base de données 90 uniquement la valeur estimée de l'erreur de localisation $\varepsilon_3$ correspondant audit point $P_3$, et non la valeur estimée de l'erreur de localisation $\varepsilon_3$ de chaque point $P_3$ ou d'une pluralité de points $P_3$ de l'image géoréférencée $A_3$.

Lors de l'étape 1100, les moyens 88 de représentation de l'erreur de localisation représentent l'erreur de localisation $\varepsilon_3$ correspondant au point $P_3$ et fournie par les moyens 84 à l'étape 1000. A cet effet, ils affichent par exemple au voisinage du point $P_3$ ou de manière superposée au point $P_3$ une étiquette sur laquelle est indiquée une information relative à l'erreur de localisation $\varepsilon_3$, accompagnée optionnellement des coordonnées annoncées $X_T$, $y_T$, $Z_T$ de localisation géographique $P_3$.

Optionnellement, l'étiquette comprend également une indication de l'espérance E(X), E(Y), E(Z) de chacune des coordonnées géographiques X, Y, Z.

L'information relative à l'erreur de localisation $\varepsilon_3$ est par exemple un histogramme de la loi de probabilité D(X, Y, Z) des coordonnées géographiques X, Y, Z.

Optionnellement ou en variante, il s'agit de l'écart type de chacune des coordonnées géographiques X, Y, Z autour de sa valeur annoncée respective $X_T$, $y_T$, $z_T$.

En variante, il s'agit de l'écart type planimétrique, représentatif de l'erreur planimétrique, c'est-à-dire de l'erreur de localisation relativement aux coordonnées planimétriques X et Y et/ou de l'écart type altimétrique, correspondant à l'écart type de la coordonnée altimétrique Z autour de sa valeur annoncée $Z_T$.

Le procédé de représentation selon ce deuxième mode de réalisation présente l'avantage de permettre à l'utilisateur de visualiser l'erreur de localisation $\varepsilon_3$ associée à un point $P_3$ de son choix de l'image géoréférencée $A_3$.

L'erreur de localisation $\varepsilon_3$ représentée par le dispositif 80 mettant en oeuvre le procédé de représentation tel que décrit ci-dessus est par exemple une erreur de localisation $\varepsilon_3$ calculée par le procédé de détermination de l'erreur de localisation décrit ci-dessus, et enregistrée dans la base de données 90.

L'image géoréférencée $A_3$ est par exemple une image brute géoréférencée, telle que l'image brute $A_0$ géoréférencée ou une image orthorectifiée telle que l'image orthorectifiée $A_2$.

## Revendications

1. Procédé de détermination d'une erreur de localisation ($\varepsilon$) d'un point ($P_0$) d'une image brute ($A_0$), chaque point ($P_0$) de l'image brute ($A_0$) de coordonnées image (I, c) dans l'image brute ($A_0$) étant associé à des valeurs annoncées de coordonnées terrain ($X_T$, $y_T$, $Z_T$) définissant la localisation géographique de l'objet représenté par le point ($P_0$) de l'image brute ($A_0$) ;
   le procédé comprenant les étapes de:

   - fournir une fonction de prise de vue (f) associant chaque point ($P_0$) de l'image brute ($A_0$) à des coordonnées terrain correspondantes (X, Y, Z), la fonction de prise de vue (f) prenant comme paramètres des grandeurs ($\theta_1$, ..., $\theta_n$) dépendant des conditions de prise de l'image brute ($A_0$), les grandeurs ($\theta_1$, ..., $\theta_n$) ayant une loi de probabilité ($D(\theta_1, ..., \theta_n)$) connue ;
   - fournir un modèle de terrain (M) reliant entre elles les coordonnées terrain (X, Y, Z) ;
   - déduire de la fonction de prise de vue (f) et du modèle de terrain (M) au moins une fonction de localisation (g) donnant, pour un point ($P_0$) de l'image brute ($A_0$) donné, au moins certaines des coordonnées terrain (X, Y, Z) de localisation de l'objet représenté par le point ($P_0$) de l'image brute ($A_0$) en fonction des grandeurs ($\theta_1$, ..., $\theta_n$) dépendant des conditions de prise de l'image brute ($A_0$),

   le procédé étant **caractérisé en ce qu'**il comprend en outre les étapes de :

   - estimer, à l'aide de la loi de probabilité ($D(\theta_1, ..., \theta_n)$) des grandeurs ($\theta_1$, ..., $\theta_n$) et de l'au moins une fonction de localisation (g) appliquée pour le point ($P_0$) de coordonnées image (I,c) de l'image brute ($A_0$), la valeur d'une grandeur statistique (G) caractéristique d'une loi de probabilité ($D(X, Y, Z)$) d'au moins l'une des coordonnées terrain (X,Y, Z) associées au point ($P_0$) de l'image brute ($A_0$) ; et
   - déduire de la valeur de la grandeur statistique (G) l'erreur de localisation ($\varepsilon$) du point ($P_0$) de

l'image brute ($A_0$).

2. Procédé selon la revendication 1, dans lequel la grandeur statistique (G) est représentative de la dispersion de l'au moins une coordonnée terrain (X, Y, Z) autour de sa valeur annoncée ($X_T$, $y_T$, $Z_T$).

3. Procédé selon l'une quelconque des revendications précédentes, dans lequel la grandeur statistique (G) est une grandeur choisie dans le groupe consistant en l'écart-type et des valeurs quantiles de la distribution de l'erreur de localisation, notamment une valeur à n%, telle que la médiane ou la valeur à 90%.

4. Procédé selon l'une quelconque des revendications précédentes, dans lequel le modèle de terrain (M) est muni d'un modèle d'erreur (err(X,Y)) dont la loi de probabilité (D(err)) est connue, dans lequel on génère par la méthode de Monte-Carlo, à l'aide de la loi de probabilité (D(err)) du modèle d'erreur (err(X,Y)) du modèle de terrain (M) un ensemble d'observations du modèle de terrain (M) de telle manière que cet ensemble obéisse à la loi de probabilité D(err) du modèle d'erreur (err(X, Y)), et dans lequel chaque fonction de localisation (g) correspond à un tirage Monte Carlo du modèle de terrain (M).

5. Procédé selon l'une quelconque des revendications 1 à 3, dans lequel le modèle de terrain (M) est dépourvu de modèle d'erreur (err(X,Y)), et dans lequel on déduit exactement une fonction de localisation (g) de la fonction de prise de vue (f) et du modèle de terrain (M).

6. Procédé selon l'une quelconque des revendications précédentes, dans lequel pour estimer la grandeur statistique (G) :

    - on génère un ensemble d'observations de chacune des grandeurs ($\theta_1$, ..., $\theta_n$) de telle manière qu'au moins la moyenne et la matrice de covariance de cet ensemble soient respectivement égales à l'espérance et à la matrice de covariance des grandeurs ($\theta_1$, ..., $\theta_n$) ;
    - on propage cet ensemble d'observations à travers l'au moins une fonction de localisation (g) pour obtenir au moins un ensemble d'observations de l'au moins une coordonnée terrain (X, Y, Z) ;
    - on en déduit une estimation de la grandeur statistique (G) représentative de la loi de probabilité (D(X, Y, Z)) de l'au moins une coordonnée terrain (X, Y, Z).

7. Procédé selon l'une quelconque des revendications précédentes, dans lequel on estime la grandeur statistique (G) par l'intermédiaire de la méthode de Monte-Carlo, en :

    - générant, à l'aide des lois de probabilité (D($\theta_1$, ..., $\theta_n$)) des grandeurs ($\theta_1$, ..., $\theta_n$), un ensemble d'observations de chacune des grandeurs ($\theta_1$, ..., $\theta_n$), de telle manière que cet ensemble obéisse à la loi de probabilité (D($\theta_1$, ..., $\theta_n$)) des grandeurs ($\theta_1$, ..., $\theta_n$) ;
    - propageant cet ensemble d'observations à travers l'au moins une fonction de localisation (g) pour obtenir au moins un ensemble d'observations de l'au moins une coordonnée terrain (X, Y, Z) ;
    - estimant la loi de probabilité (D(X, Y, Z)) de l'au moins une coordonnée terrain (X, Y, Z) à partir de cet au moins un ensemble d'observations de l'au moins une coordonnée terrain (X, Y, Z) ;
    - déduisant la grandeur statistique (G) de la loi de probabilité (D(X, Y, Z)) estimée de l'au moins une coordonnée terrain (X, Y, Z).

8. Procédé selon l'une quelconque des revendications 1 à 6, dans lequel l'espérance de chacune des grandeurs ($\theta_1$, ..., $\theta_n$) et une matrice de covariance ($P_\theta$) des grandeurs ($\theta_1$, ..., $\theta_n$) étant connues, on estime la grandeur statistique (G) par l'intermédiaire de la méthode sigma points, en :

    - choisissant un ensemble de sigma points ($S_i$), affectés chacun de poids ($\omega_i$), chaque sigma point ($S_i$) constituant une observation de chacune des grandeurs ($\theta_1$, ..., $\theta_n$), l'ensemble de sigma points ($S_i$) étant choisi de telle manière que l'espérance et la covariance calculées par moyenne pondérée à partir de cet ensemble de sigma points ($S_i$) correspondent respectivement à l'espérance (E($\theta$)) et à la matrice de covariance ($P_\theta$) des grandeurs ($\theta_1$, ..., $\theta_n$) ;
    - propageant cet ensemble d'observations à travers l'au moins une fonction de localisation (g) pour obtenir au moins un ensemble d'observations de l'au moins une coordonnée terrain (X, Y, Z) ; et
    - estimant la grandeur statistique (G) à partir de l'au moins un ensemble d'observations de l'au moins une coordonnée terrain (X, Y, Z).

9. Procédé de détermination d'une erreur de localisation ($\varepsilon_2$) d'un point ($P_2$) d'une image géoréférencée ($A_2$), construite à partir d'au moins une image brute ($A_0$), le procédé comprenant les étapes de :

    - déterminer un point ($P_0$) de coordonnées (I, c) de l'une des images brutes ($A_0$) à partir duquel le point ($P_2$) de l'image géoréférencée ($A_2$) a été construit ;
    - mettre en oeuvre le procédé de détermination d'une erreur de localisation ($\varepsilon$) selon l'une des revendications 1 à 8, appliqué au point ($P_0$) de

l'image brute ($A_0$) déterminé à l'étape précédente, l'image brute ($A_0$) considérée étant l'image brute ($A_0$) à laquelle appartient ledit point ($P_0$) de l'image brute ($A_0$) déterminé, de manière à déterminer l'erreur de localisation ($\varepsilon$) du point ($P_0$) de l'image brute ($A_0$) ;
- déduire de l'erreur de localisation ($\varepsilon$) du point ($P_0$) de l'image brute ($A_0$) l'erreur de localisation ($\varepsilon_2$) du point ($P_2$) de l'image géoréférencée ($A_2$) construite à partir de l'image brute ($A_0$).

**10.** Dispositif de détermination d'une erreur de localisation ($\varepsilon$) d'un point ($P_0$) d'une image brute ($A_0$), l'image brute ($A_0$) étant géoréférencée, chaque point ($P_0$) de l'image brute ($A_0$) de coordonnées (l, c) dans l'image brute ($A_0$) étant associé à des valeurs annoncées de coordonnées terrain ($X_T$, $y_T$, $Z_T$) définissant la localisation géographique de l'objet représenté par le point ($P_0$) de l'image brute ($A_0$) ; le dispositif comprenant :

    - des moyens pour fournir une fonction de prise de vue (f) associant chaque point ($P_0$) de l'image brute ($A_0$) à des coordonnées terrain correspondantes (X, Y, Z), la fonction de prise de vue (f) prenant comme paramètres des grandeurs ($\theta_1$, ..., $\theta_n$) dépendant des conditions de prise de l'image brute ($A_0$), les grandeurs ($\theta_1$, ..., $\theta_n$) ayant une loi de probabilité ($D(\theta_1$, ..., $\theta_n)$) connue ;
    - des moyens pour fournir un modèle de terrain (M) reliant entre elles les coordonnées terrain (X, Y, Z) ;
    - des moyens pour déduire, à partir de la fonction de prise de vue (f) et du modèle de terrain (M), au moins une fonction de localisation (g) donnant, pour un point ($P_0$) de l'image brute ($A_0$) donné, au moins certaines des coordonnées terrain (X, Y, Z) de localisation de l'objet représenté par le point ($P_0$) de l'image brute ($A_0$) en fonction de grandeurs ($\theta_1$, ..., $\theta_n$) dépendant des conditions de prise de l'image brute ($A_0$), les grandeurs ($\theta_1$, ..., $\theta_n$) ayant une loi de probabilité ($D(\theta_1$, ..., $\theta_n)$) connue,

le dispositif étant **caractérisé en ce qu'**il comprend en outre :

    - des moyens pour estimer, à l'aide de l'au moins une fonction de localisation (g) appliquée pour le point ($P_0$) de coordonnées image (l,c) de l'image brute ($A_0$) et de la loi de probabilité ($D(\theta_1$, ..., $\theta_n)$) des grandeurs ($\theta_1$, ..., $\theta_n$), la valeur d'une grandeur statistique (G) caractéristique d'une loi de probabilité (D(X, Y, Z)) d'au moins l'une des coordonnées terrain (X, Y, Z) associées au point ($P_0$) de l'image brute ($A_0$); et
    - des moyens pour déduire de la valeur de la grandeur statistique (G) l'erreur de localisation ($\varepsilon$) du point ($P_0$) de l'image brute ($A_0$).

**11.** Dispositif de détermination d'une erreur de localisation ($\varepsilon_2$) d'un point ($P_2$) d'une image géoréférencée ($A_2$), construite à partir d'au moins une image brute ($A_0$), le dispositif comprenant :

    - des moyens pour déterminer un point ($P_0$) de coordonnées image (l, c) de l'une des images brutes ($A_0$) à partir duquel le point ($P_2$) de l'image géoréférencée ($A_2$) a été construit ;
    - un dispositif de détermination selon la revendication 10, lequel est propre à déterminer une erreur de localisation ($\varepsilon$) du point ($P_0$) de l'image brute ($A_0$) déterminé par les moyens pour déterminer un point ($P_0$) de coordonnées image (l, c) de l'une des images brutes ($A_0$) à partir duquel le point ($P_2$) de l'image géoréférencée ($A_2$) a été construit, l'image brute ($A_0$) considérée étant l'image brute ($A_0$) à laquelle appartient ledit point ($P_0$) ;
    - des moyens pour déduire de l'erreur de localisation ($\varepsilon$) du point ($P_0$) de l'image brute ($A_0$) l'erreur de localisation ($\varepsilon_2$) du point ($P_2$) de l'image géoréférencée ($A_2$) construite à partir de l'image brute ($A_0$).

## FIG.1

$$\underline{\text{FIG.2}}$$

10

$f$
$M$
$D\,(\theta_1,...,\theta_n)$
$D(err)$

11

$h$

20

-210-

$S_1,...,S_N$

-212-

$(xi,yi,zi)_{i=1,...,N}$

-214-

$D(X,Y,Z)$

-216-

$G(P_0)\begin{vmatrix}G_X\\G_Y\\G_Z\end{vmatrix}$

30

$\mathcal{E}(P_0)\begin{vmatrix}\mathcal{E}_X\\\mathcal{E}_Y\\\mathcal{E}_Z\end{vmatrix}$

FIG.3

FIG.4

FIG.5

FIG.6

400 — $M_{(x_T, y_T)}$

$z_T$

410 — $f_{(\theta_1, \cdots \theta_n)}(x_T, y_T, z_T)$

40

$P_{o(l,c)}$

10

$f$
$M$
$D(\theta_1, \ldots, \theta_n)$
$D(err)$

11

$h$

-210-

$S_1, \ldots, S_N$

-212-

$(xi, yi, zi)_{i=1, \ldots, N}$

-214-

$D(X, Y, Z)$

-216-

20

$G(P_0) \Big| \begin{matrix} G_X \\ G_Y \\ G_Z \end{matrix}$

30

$\mathcal{E}(P_0) \Big| \begin{matrix} \mathcal{E}_X \\ \mathcal{E}_Y \\ \mathcal{E}_Z \end{matrix}$

50

$\mathcal{E}(P_0) = \mathcal{E}_2(P_2)$

$\mathcal{E}_2(P_2) \Big| \begin{matrix} \mathcal{E}_{2X} \\ \mathcal{E}_{2Y} \\ \mathcal{E}_{2Z} \end{matrix}$

## FIG.7

FIG.8

FIG.9

-700-

-800-

-1000-

-1100-

# FIG.10

A₃

C

FIG.11

A_4

FIG.12